# EUROPÄISCHE PATENTANMELDUNG

(11) **EP 1 308 658 A2**
(43) Veröffentlichungstag der Anmeldung: **07.05.2003**
(21) Anmeldenummer: 02024137.8
(22) Anmeldetag: 30.10.2002
(51) Int. Cl.: F16K 11/085, F16K 27/06, A01M 7/00

(54) **Mehrwegehahn**

(30) Priorität: 06.11.2001 DE 10154451
(71) Anmelder: Amazonen-Werke H. Dreyer GmbH & Co. KG, 49205 Hasbergen (DE)
(72) Erfinder: Ehlen, Volker, 04229 Leipzig (DE); Kirsten, Eckart, 04205 Leipzig (DE)

(57) **Zusammenfassung**

Mehrwegehahn (9) bestehend aus einem Gehäuse (19), an welchem entsprechend der Anzahl der Wege winklig zueinander versetzt Anschlussstellen (8,10,13,14) vorgesehen sind, und einen innerhalb des Gehäuses (19) drehbar gelagerten und von einem Betätigungselement (20) betätigbaren Stellelement (18), welches mit Ventilelementen (12,22,23), die zumindest einigen der Anschlussstellen (8,10,13,14) zugeordnet sind, um die zugeordnete Anschlussstelle (8,10,13,14) wahlweise zu verschließen oder freizugeben, zusammenwirken.

## Beschreibung

Die Erfindung betrifft einen Mehrwegehahn, bestehend aus einem Gehäuse, in welchem entsprechend der Anzahl der Wege winklig zueinander versetzt Anschlussstellen abgeschlossene Stellen vorgesehen sind, und innerhalb des Gehäuses drehbar gelagerten und von einem Betätigungselement betätigbaren Stellelement.

Derartige Mehrwegehähne werden vielfältig, beispielsweise auch bei landwirtschaftlichen Feldspritzen eingesetzt.

Der Erfindung liegt die Aufgabe zugrunde, einen Mehrwegehahn, insbesondere für den Einsatz bei landwirtschaftlichen Feldspritzen zu schaffen, der einfach ausgebildet und funktionssicher ist.

Diese Aufgabe wird erfindungsgemäß durch die Merkmale des Patentanspruches 1 gelöst. Infolge dieser Maßnahmen kann mittels der Ventilelemente die jeweils gewünschte Verbindung in einfacher Weise funktionssicher hergestellt werden.

Insbesondere bei dem Einsatz des Mehrwegehahnes in Saugleitungen ist vorgesehen, dass einer Anschlussstelle keinem Ventilelement zugeordnet ist, und dass diese Anschlussstelle mit einer mit Unterdruck beaufschlagten Leitung verbunden ist.

Eine besonders funktionssichere Ausgestaltung des Mehrwegehahnes, insbesondere beim Einsatz in landwirtschaftlichen Feldspritzen wird dadurch erreicht, dass die Ventilelemente als Rückschlagventile ausgebildet sind. Hierdurch wird sichergestellt, wenn der Unterdruck an der Saugleitung abfällt, dass keine angesaugte Flüssigkeit mehr zurückfließen kann, da die als Rückschlagventile wirkende Ventilelemente die Leitung automatisch verschließen. Dieses hat auch den Vorteil, dass keine separaten Rückschlagventile in den einzelnen Leitungen zusätzlich anzuordnen zu sind, vielmehr sind die Rückschlagventile bereits in den Mehrwegehahn integriert.

Die bisher bekannten Mehrwegehähne weisen einen begrenzten Durchflussquerschnitt auf, da der Durchflussquerschnitt sich in dem verdrehbaren Verschlusselement, beispielsweise einer Kugel befindet. Durch die erfindungsgemäße Ausgestaltung des Mehrwegehahnes ergibt sich eine kompakte Bauweise mit unmittelbar in dem Mehrwegehahn integrierten Rückschlagventilen. Auch sind die Strömungsverhältnisse hierdurch einfacher, besser und größer auszulegen. Es ergeben sich bessere Strömungsverhältnisse, was insbesondere bei dem Einsatz in Saugleitungen wichtig ist. Auch besteht die Möglichkeit, diesen erfindungsgemäßen Mehrwegehahn direkt an den Filter oder in einen Filter integriert auszuordnen. Da mehrere Verbindungsleitungen an dem Mehrwegehahn anmünden, entfallen viele Leitungen, beispielsweise bei dem Einsatz in einem Feldspritzensystem. Hierdurch ergeben sich auch weniger Restmengen. Da die Rückschlagventile unmittelbar in dem Mehrwegehahn integriert sind und somit keine zusätzlichen Rückschlagventile in den einzelnen Leitungen eingebaut werden müssen, lässt sich der Mehrwegehahn preiswert herstellen.

Eine einfache Anordnung der Ventilelemente in dem Mehrwegehahn wird dadurch erreicht, dass die Ventilelemente als jeweils mit einem Gelenk schwenkbar angeordnete Ventilklappen ausgebildet sind.

Um die Ventilelemente in Schließstellung zu bringen bzw. zu ermöglichen, das sie in Öffnungsstellung gelangen, ist vorgesehen, dass das Stellelement eine der Anzahl der Ventilelemente entsprechende und die Ventile in Schließstellung bringende und haltende Betätigungsmittel aufweist.

Um in einfacher Weise sämtliche Leitungen absperren zu können, ist vorgesehen, dass die Betätigungsmittel in der Nullstellung des Stellelementes jeweils auf ein Ventilelement einwirken.

Um ein sicheres Schließen der einzelnen Ventilelemente, wenn sie die verschiedenen Leitungen absperren sollen, zu erreichen, ist vorgesehen, dass die Betätigungsmittel federnde und in Richtung der Ventile wirkende Elemente sind.

Eine einfache Ausgestaltung der Betätigungsmittel lässt sich dadurch erreichen, dass die Betätigungsmittel verschiebbar in dem Stellelement angeordnet und in Richtung der Ventilelemente federbelastet beaufschlagt sind.

Um zu ermöglichen, dass das Ventilelement sich öffnet um eine Leitung freizugeben, ist vorgesehen, dass das Stellelement in dem einer Anschlussstelle zugeordneten Bereich ein in Richtung der Drehachse des Stellelemente zurückspringenden Bereich aufweist.

Eine vorteilhafte Ausgestaltung des Mehrwegehahnes bezüglich der Anschlussstellen und Betätigungselemente wird dadurch erreichen, dass die Anschlussstellen und die Betätigungselemente gleichförmig (gleichmäßig) verteilt angeordnet (gleiche Winkelaufteilung von Anschlussstelle zu Anschlussstelle bzw. von Betätigungsmittel zu Betätigungsmittel - zurückspringender Bereich) sind.

Um in einfacher Weise die Öffnung des Ventilelementes zur Freigabe einer Anschlussleitung zu erreichen, ist vorgesehen, dass einer Anschlussstelle an Stelle eines Betätigungselementes des Stellelementes der zurückspringende Bereich des Stellelementes zugeordnet ist.

Eine einfache Ausgestaltung des Betätigungsmittels wird dadurch erreichen, dass die die Betätigungsmittel federnd beaufschlagenden Druckfedern sich an dem Stellelement abstützen.

Damit sichergestellt ist, dass der Ausgangsleitung immer die Flüssigkeit ungestört zugeführt wird, ist vorgesehen, dass der als Ausgangsleitung ausgebildeten Anschlussstelle kein Ventilelement zugeordnet ist.

Eine weitere Möglichkeit das Stellelement einfach auszugestalten ergibt sich dadurch, dass das Stellelement aus federndem Material hergestellt und eine Kurvenscheibe ist und im Querschnitt als sich über einen Winkelbereich der mit dem Stellelement versehenen Anschlussstelle entsprechenden, jedoch geringfügig vergrößertem Sektor kreisförmig ist und der übrige Bereich zurückspringend ausgebildet ist.

Um sicherzustellen, dass das jeweilige Ventilelement, welches die freizubebende Leitung freigeben soll, in eine optimale Öffnungsstellung gelaufen kann, ist vorgesehen, dass der zurückspringende Bereich abgeschrägt ausgebildet ist, dass das Ventilelement in seiner Öffnungsposition an die abgeschrägte Fläche anlegbar ist.

Eine optimale Ausbildung des Stellelementes ergibt sich dadurch, dass das Stellelement als Kurvenscheibe ausgebildet ist und deren folgenden Kurvenverlauf eine verkürzte Epizykloide ist.

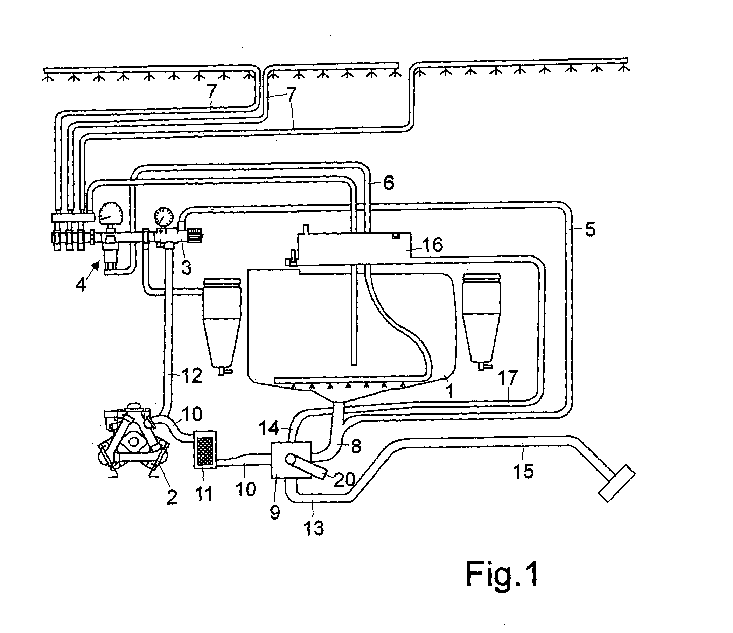

Weitere Einzelheiten der Erfindung sind der Beispielsbeschreibung und den Zeichnungen zu entnehmen. Hierbei zeigen
- Fig. 1: den Anschluss der verschiedenen Leitungen einer Feldspritze in schematischer Darstellungsweise,
- Fig. 2: den Dreiwegehahn in der Draufsicht,
- Fig. 3: den Dreiwegehahn in der Vorderansicht und
- Fig. 4: den Dreiwegehahn in der Unteransicht.

Die landwirtschaftliche Feldspritze weist einen Flüssigkeitstank 1, eine Pumpe 2, ein Druckregelventil 3, eine Dosierarmatur 4, die Rücklaufleitung 5, die Rührleitung 6, sowie die Spritzleitungen 7 auf. An dem Boden des Flüssigkeitstanks 1 ist die Anschlussleitung 8 angeschlossen. Diese Anschlussleitung 8 führt zu dem Mehrwegehahn 9, der an die Saugleitung 10 der Pumpe 2 angeschlossen ist. In der Saugleitung ist der Filter 11 angeordnet. Von der Pumpe 2 führt die Druckleitung 12 zu dem Druckregelventil 3 und der Dosierarmatur 4. Die Pumpe 2 wird in bekannter und daher nicht näher dargestellter Weise von einer Kraftquelle, beispielsweise einer Zapfwelle eines Schleppers oder einer Hydraulikpumpe angetrieben. Der Mehrwegehahn 9 weist noch zwei weiteren Anschlussleitungen 13 und 14 auf. Die eine Anschlussleitung ist mit einem Saugschlauch 15 verbunden, mittels welcher Wasser aus einem Tank oder anderen Behältnissen oder Speichermitteln angesaugt werden kann. An dem anderen Anschluss 14 ist der Klarwasserbehälter 16 mit einer entsprechenden Leitung 17 angeschlossen.

Je nach Einstellung des Stellelementes 18 des Mehrwegehahnes 9 saugt die Pumpe 2 über die Saugleitung 8 und den Filter 9 entweder die Spritzflüssigkeit aus dem Vorratsbehälter 1 über die Leitung 8 oder zum Befüllen des Flüssigkeitstanks 1 Wasser über den Saugschlauch 15, oder um den Tank 1 und die Leitungen 17 zu spülen, über die Leitung Wasser aus dem Klarwassertank 16 an.

Im Folgenden soll der Aufbau der Mehrwegehahnes erläutert werden:

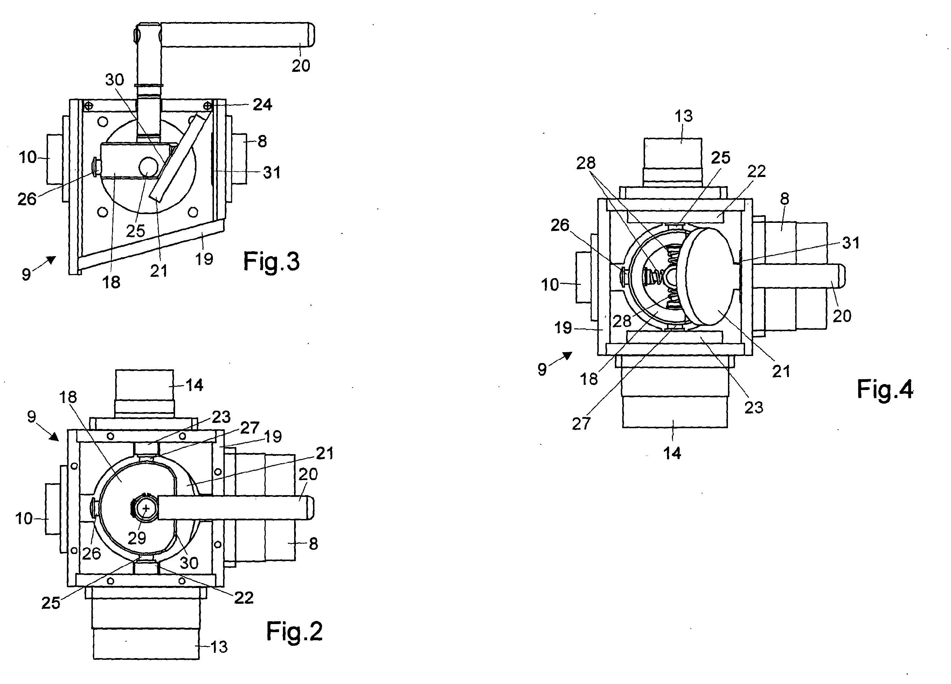

In den Fig. 2 bis 4 ist der Mehrwegehahn 9 in schematischer Darstellung dargestellt, wobei in der jeweiligen Ansicht die jeweilig dem Betrachter zugewandte Wand des Gehäuses des Mehrwegehahnes 9 zur Vereinfachung der Darstellung entfernt dargestellt ist. Der Mehrwegehahn 9 besteht aus dem Gehäuse 19, an welchem entsprechend der Anzahl der Wege winklig zueinander versetzt vier Anschlussstellen 8,10,13,14 vorgesehen sind. Jede Anschlussstelle 8,10,13,14 weist einen Anschlussstutzen zum Anschluss einer Leitung 8 auf. An dem Anschluss ist die zu dem Behälter führenden Leitung angeschlossen, an dem Anschluss ist die zu der Pumpe 2 führenden Saugleitung 10 angeschlossen, an dem Anschluss 13 ist der Befüllschlauch 15 angeordnet und an dem Anschluss 14 ist die Leitung 17 für den Klarwasserbehälter 16 angeschlossen. In dem Gehäuse 19 ist das mittels des Betätigungselementes 20 betätigbare Stellelement 18 drehbar abgedichtet in den Wänden des Gehäuses 21,22,23 gelagert. Den Leitungen 8,13,14 ist jeweils ein Ventilelement zugeordnet, um diese jeweilige Anschlussstelle zu schließen oder freizugeben. Das Stellelement 18 wirkt mit diesem Ventilelementen 21,22,23 zusammen, wie nachfolgend noch erläutert werden wird.

Der Anschluss, die mit der zu der Pumpe 2 führenden Leitung 10 verbunden ist, ist kein Ventilelement zugeordnet. Diese Anschlussstelle wird über die Pumpe 2 mit Unterdruck beaufschlagt. Die Ventilelemente 21,22,23 sind als Ventilklappen ausgebildet und jeweils mit einem Gelenk 24 schwenkbar an dem Gehäuse 19 angeordnet. Diese Ventilelemente 21,22,23 wirken aufgrund ihrer Anordnung als Rückschlagventile. Das Stellelement 18 weist eine Anzahl der Ventilelemente 21,22,23 entsprechende und die Ventile 21,22,23 in Schließstellung bringende und haltende Betätigungsmittel 25,26,27 auf. Das Stellelement 18 ist in der Stellung dargestellt, in welchem die zu dem Behälter 1 führenden Anschlussstelle 8 freigegeben ist, so dass Flüssigkeit aus den Behältern 1 von der Pumpe 2 angesaugt wird. Wird das Stellelement 19 mittels des Betätigungsmittels 20 um 180° gedreht, so würde jeweils ein Betätigungsmittel 25,26,27 auf ein Ventilelement einwirken und sämtliche Anschlussleitungen wären verschlossen. Die Betätigungsmittel 25,26,27 sind in dem Stellelement 18 verschiebbar angeordnet. Sie sind als Stößel ausgebildet und in Richtung der Ventilelemente 21,22,23 über die Druckfedern 28 federbelastet beaufschlagt. Das Stellelement 18 weist an einer der Anschlussstellen zugeordneten Bereich ein in Richtung der Drehachse 29 des Stellelementes 19 zurückspringenden Bereich 30.auf, um zu ermöglichen, dass sich in den entsprechenden Stellungen jeweils ein Ventilelement 21,22,23 von der Anschlussstelle abheben kann und somit die Anschlussstelle freigibt, wie in den Zeichnungen für das Ventilelement 21 dargestellt ist.

Die Anschlussstellen 8, 10, 13, 14und die Betätigungselemente 25, 26, 27 sind gleichmäßig und bzw. gleichförmig verteilt angeordnet. Es ist eine gleiche Winkelaufteilung von Anschlussstelle zu Anschlussstelle bzw. von Betätigungsmittel zu Betätigungsmittel bzw. zurückspringenden Bereich vorgesehen.

Die die Betätigungsmittel 25,26,27 federnd beaufschlagenden Druckfedern 28 stützen sich auf dem Stellelement 18 ab. Der zu der Pumpe 2 führenden Ausgangsleitung 10 des Mehrwegehahnes 9 ist kein Ventilelement zugeordnet.

Der zurückspringende Bereich 30 des Stellelementes 18 ist abgeschrägt ausgebildet, wobei das jeweilige Ventilelement in seiner Öffnungsstellung sich an die abgeschrägte Fläche anlegt, wie Fig. 2, 3 und 4 zeigen. Das Stellelement 19 ist als Kurvenscheibe ausgebildet und deren Kurvenlauf ist eine verkürzte Epizykloide. Der auf der Saugseite der Feldspritzleitungssystem angeordnete Mehrwegehahn 9 ist als Saughahn ausgebildet. Die Funktionsweise des Mehrwegehahnes 9 ist folgende:

Der Mehrwegehahn 9 ermöglicht die erforderlichen Verbindungen auf der Saugseite der Pumpe 2 und zwar folgende Funktionen, ansaugen der Spritzflüssigkeit aus dem Behälter 1, ansaugen mit dem Saugschlauch 15 von Wasser zum Befüllen des Vorratsbehälters 1, und saugen von Klarwasser aus dem Klarwasserbehälter 16.

Um die entsprechende Funktion der Feldspritze ausführen zu können, wird der Bedienhebel 20 des Stellelementes 19 von dem Mehrwegehahn 9 in die gewünschte Position gebracht. Im Ausführungsbeispiel befindet sich das Stellelement 19 des Mehrwegehahnes 9 in der Position um aus dem Behälter 1 Flüssigkeit von der Pumpe 2 ansaugen zu können. Hierbei wird die abgeschrägte Seite 30 des Stellelementes 18 zu diesem Sauganschluss 8 gedreht. Durch den von der Pumpe 2 erzeugten Unterdruck über die Saugleitung 10 wird die Ventilklappe 21 so lange geöffnet, bis sie an der abgeschrägten Seite 30 des Stellelementes 18 anliegt. Damit ist der gewünschte Saugweg geöffnet. Die beiden anderen Sauganschlüsse 13 und 14 werden durch die federbelasteten Schließstößel 25,27 welche auf die Klappen 22 und 23 und diese wiederum auf den an dem O-Ring 31, der vor der Anschlussstelle an dem Gehäuse angebracht ist, drücken, mittels der Klappen 22 und 23 dicht verschlossen. Falls der Unterdruck an der Saugleitung 10 abfallen sollte und die Flüssigkeit in entgegengesetzter Richtung zu fließen versucht, wird durch die Strömung dieser Flüssigkeit die Klappe 21 gegen die Dichtfläche 31 des Gehäuses bzw. den O-Ring 31 gedrückt, so dass die Klappe 21 diesen Anschluss 8 verschließt. Somit wirkt die Ventilklappe 21 auch als Rückschlagventil und verhindert das jeweils Flüssigkeit zurückfließt. Gleiches gilt für die den anderen Anschlüssen 13 und 14 zugeordneten Ventilklappen 22 und 23.

Falls eine andere Funktion mit der Feldspritze durchgeführt werden soll, wird das Stellelement 18 über den Bedienhebel 20 gedreht. Der gewünschte Anschluss wird gewechselt. Hierbei schließt das Stellelement 18 über die jeweiligen Stößel 25, 26, 27, die jeweilige Anschlussstelle, in dem die jeweilige Ventilklappe 21, 22, 23 gegen den jeweiligen Anschluss gedrückt wird.

Beim Saugen mit dem Saugschlauch 15 übernimmt die Klappe 21 gleichzeitig die Funktion eines Sicherheitsventils, wenn die Flüssigkeit zurückströmen will, wie bereits vor erläutert. Bei Reinigungs- und Wartungsarbeiten wird der Bedienhebel 20 so bewegt, dass alle drei Sauganschlüsse über die Ventilklappen 21, 22, 23 im Zusammenwirken mit den federbelasteten Stößeln 25, 26, 27 des Stellelementes 18 fest verschlossen sind.

## Patentansprüche

1. Mehrwegehahn (9) bestehend aus einem Gehäuse (19), an welchem entsprechend der Anzahl der Wege winklig zueinander versetzt Anschlussstellen (8,10,13,14) vorgesehen sind, und einen innerhalb des Gehäuses (19) drehbar gelagerten und von einem Betätigungselement (20) betätigbaren Stellelement (18), welches mit Ventilelementen (12,22,23), die zumindest einigen der Anschlussstellen (8,10,13,14)zugeordnet sind, um die zugeordnete Anschlussstelle (8,10,13,14)wahlweise zu verschließen oder freizugeben, zusammenwirken.

2. Mehrwegehahn nach Anspruch 1, **dadurch gekennzeichnet, dass** einer Anschlussstelle (10) kein Ventilelement zugeordnet ist, dass diese Anschlussstelle (10) mit einer mit Unterdruck beaufschlagten Leitung (10) verbunden ist.

3. Mehrwegehahn nach Anspruch 1, **dadurch gekennzeichnet, dass** die Ventilelemente (21,22,23) als Rückschlagventile ausgebildet sind.

4. Mehrwegeeinheit nach einem oder mehreren der vorstehenden Ansprüche, **dadurch gekennzeichnet, dass** die Ventilelemente (21,22,23) als jeweils mit einem Gelenk (24) schwenkbar angeordnete Ventilklappen (21,22,23) ausgebildet sind.

5. Mehrwegehahn nach einem oder mehreren der vorstehenden Ansprüche, **dadurch gekennzeichnet, dass** das Stellelement (18) eine der Anzahl der Ventilelemente (21,22,23) entsprechende und die Ventile (21,22,23) in Schließstellung bringende und haltende Betätigungsmittel (25,26,27) aufweist.

6. Mehrwegehahn nach einem oder mehreren der vorstehenden Ansprüche, **dadurch gekennzeichnet, dass** die Betätigungsmittel (25,26,27) in der Nullstellung des Stellelementes (18) jeweils auf ein Ventilelement (21,22,23) einwirken.

7. Mehrwegehahn nach einem oder mehreren der vorstehenden Ansprüche, **dadurch gekennzeichnet, dass** die Betätigungsmittel (25,26,27) federnd und in Richtung der Ventile (21,22,23) wirkende Elemente sind.

8. Mehrwegehahn nach einem oder mehreren der vorstehenden Ansprüche, **dadurch gekennzeichnet, dass** die Betätigungsmittel (25,26,27) verschiebbar in dem Stellelement (18) angeordnet und in Richtung der Ventilelemente (21,22,23) federbelastet beaufschlagt sind.

9. Mehrwegehahn nach einem oder mehreren der vorstehenden Ansprüche, **dadurch gekennzeichnet, dass** das Stellelement (18) in dem einer Anschlussstelle zugeordneten Bereich ein in Richtung der Drehachse (29) des Stellelemente (18) zurückspringenden Bereich (30) aufweist.

10. Mehrwegehahn nach einem oder mehreren der vorstehenden Ansprüche, **dadurch gekennzeichnet, dass** die Anschlussstellen (8,10,13,14) und die Betätigungselemente (25,26,27) gleichförmig (gleichmäßig) verteilt angeordnet (gleiche Winkelaufteilung von Anschlussstelle zu Anschlussstelle bzw. von Betätigungsmittel zu Betätigungsmittel - zurückspringender Bereich) sind.

11. Mehrwegehahn nach einem oder mehreren der vorstehenden Ansprüche, **dadurch gekennzeichnet, dass** einer Anschlussstelle an Stelle eines Betätigungselementes (25,26,27) des Stellelementes (18) der zurückspringende Bereich (30) des Stellelementes (18) zugeordnet ist.

12. Mehrwegehahn nach einem oder mehreren der vorstehenden Ansprüche, **dadurch gekennzeichnet, dass** die die Betätigungsmittel (25,26,27) federnd beaufschlagenden Druckfedern (28) sich an dem Stellelement (18) abstützen.

13. Mehrwegehahn nach einem oder mehreren der vorstehenden Ansprüche, **dadurch gekennzeichnet, dass** der als Ausgangsleitung (10) ausgebildete Anschlussstelle kein Ventilelement zugeordnet ist.

14. Mehrwegehahn nach einem oder mehreren der vorstehenden Ansprüche, **dadurch gekennzeichnet, dass** das Stellelement (18) aus federndem Material hergestellt und eine Kurvenscheibe ist und im Querschnitt als sich über einen Winkelbereich der mit dem Stellelement versehenen Anschlussstelle entsprechenden, jedoch geringfügig vergrößertem Sektor kreisförmig ist und der übrige Bereich zurückspringend ausgebildet ist.

15. Mehrwegehahn nach einem oder mehreren der vorstehenden Ansprüche, **dadurch gekennzeichnet, dass** der zurückspringende Bereich (30) des Stellelementes (18) abgeschrägt ausgebildet ist, dass das Ventilelement (21,22,23) in seiner Öffnungsposition an die abgeschrägte Fläche (30) anlegbar ist.

16. Mehrwegehahn nach einem oder mehreren der vorstehenden Ansprüche, **dadurch gekennzeichnet, dass** das Stellelement (18) als Kurvenscheibe ausgebildet ist und deren folgenden Kurvenverlauf eine verkürzte Epizykloide ist.
